# EUROPEAN PATENT APPLICATION

(11) **EP 4 810 821 A1**
(43) Date of publication of application: **23.09.2026**
(21) Application number: 25212624.8
(22) Date of filing: 31.10.2025
(51) Int. Cl.: F16F 9/49, F16F 9/10, F16F 9/19

(54) **STABILIZATION ASSEMBLY AND AUTOMOTIVE SUSPENSION SYSTEM COMPRISING THE SAME**

(30) Priority: 18.03.2025 CN 202510325175
(71) Applicant: Zhejiang Leapmotor Technology Co., Ltd, Hangzhou, Zhejiang 310051 (CN)
(72) Inventor: YANG, Fang, Hangzhou, 310051 (CN); CHEN, Hongzheng, Hangzhou, 310051 (CN); HU, Chunbo, Hangzhou, 310051 (CN); NIE, Xiaogang, Hangzhou, 310051 (CN); WANG, Xiaoyun, Zhejiang, 310051 (CN); ZHAO, Yongmao, Zhejiang, 310051 (CN)
(74) Representative: Novagraaf Technologies

(57) **Abstract**

Disclosed are a stabilization assembly (10) and an automotive suspension system. A supporting seat (11) of the stabilization assembly (10) has an accommodating space; the damping member (12) is disposed in the accommodating space; one end of the stabilization member (13) penetrates through the supporting seat, and a part of the stabilization member (13) is disposed in the accommodating space and is slidably connected to the supporting seat via the damping member; the buffer member (14) is disposed on the stabilization member (13); buffer fluid is stored in the accommodating space of the supporting seat; the stabilization member (13) slides relative to the supporting seat; the buffer fluid flows through the damping member and generates a first damping force; and the buffer member (14) is configured to move in synchronism with the stabilization member (13) and generate a second damping force under a hydraulic action of the buffer fluid.

## Description

### Technical Field

The present application relates to the technical field of motor vehicles, and in particular to a stabilization assembly and an automotive suspension system.

### Background

In an automotive suspension system, a stabilization assembly is usually provided to realize the correction of a chassis of a motor vehicle, so that in an actual working condition of the motor vehicle, a torsional motion of the motor vehicle can be slowed down by means of a damping force provided by the stabilization assembly, thereby improving the stability and comfort of the motor vehicle.

An existing stabilization assembly can only provide a damping force by means of a damping member disposed in a buffer fluid, and the damping force is generally a fixed value, so that the stabilization assembly cannot adjust the damping force according to different working conditions of the motor vehicle, and the stabilization effect is not good, and the usage requirements of the motor vehicle in different scenarios cannot be satisfied.

### Summary

In order to solve the described problems existing in the art known to inventors, the present application provides a stabilization assembly and an automotive suspension system.

In order to solve the technical problem existing in the art known to inventors, the present application provides a first technical solution. The present application provides a stabilization assembly applied to an motor vehicle, the stabilization assembly including a supporting seat, a damping member, a stabilization member and a buffer member; the supporting seat has a accommodating space; the damping member is disposed in the accommodating space; one end of the stabilization member penetrates through the supporting seat, and a part of the stabilization member is disposed in the accommodating space and is slidably connected to the supporting seat via the damping member; the buffer member is disposed on the stabilization member; buffer fluid is stored in the accommodating space of the supporting seat, and the stabilization member slides relative to the supporting seat, the buffer fluid flows through the damping member and generates a first damping force, and the buffer member is configured to move in synchronism with the stabilization member and generate a second damping force under a hydraulic action of the buffer fluid, a torsional motion of the motor vehicle is stabilized by the first damping force and the second damping force.

In some embodiments, the supporting seat includes a seat body, a first seat cover and a second seat cover, the seat body forms the accommodating space, and the stabilization member penetrates through the first seat cover; the second seat cover is disposed on a side of the seat body away from the first seat cover, and the second seat cover is configured to be connected to a suspension of the motor vehicle through a connector.

In some embodiments, the stabilization member penetrates the damping member, the damping member is configured to divide the accommodation space into a first cavity and a second cavity, the first cavity is disposed between the first seat cover and the damping member, and the second cavity is disposed between the second seat cover and the damping member; the buffer fluid flows through the damping member, and the damping member slides relatively in the seat body under a hydraulic action of the buffer member, so as to adjust a volume of the first cavity and/or a volume of the second cavity.

In some embodiments, the stabilization assembly includes a first buffer member; the first buffer member is disposed on the stabilization member; and the first buffer member is disposed between the first seat cover and the damping member.

In some embodiments, the motor vehicle is in the torsional motion, the stabilization member is configured to move upward, and the damping member is configured to move upward along with the stabilization member and enable the buffer fluid to enter the second cavity from the first cavity, so as to generate the first damping force; the first buffer member is configured to move upward along with the stabilization member, and push the buffer fluid in the first cavity during a movement to generate the second damping force.

In some embodiments, the stabilization assembly includes a second buffer member; the second buffer member is disposed at an end of the stabilization member away from the first seat cover.

In some embodiments, the motor vehicle is in the torsional motion, the stabilization member is configured to move downward, and the damping member is configured to move downward along with the stabilization member and enable the buffer fluid to enter the first cavity from the second cavity, so as to generate the first damping force; the second buffer member is configured to move downward along with the stabilization member, and push the buffer fluid in the second cavity during a movement to generate the second damping force.

In some embodiments, the stabilization assembly further includes an adjusting mechanism disposed on the supporting seat and located in the second cavity, and the adjusting mechanism is configured to slide along with the stabilization member to ensure that the first cavity is filled with the buffer fluid.

In some embodiments, the adjusting mechanism includes a third cavity and a floating member, wherein the floating member is disposed between the damping member and the second seat cover, the third cavity is an accommodation space between the floating member and the second seat cover, the third cavity is configured to store an regulating gas, and the regulating gas is configured to drive the floating member to slide with the stabilization member so as to adjust the volume of the second cavity.

In order to solve the technical problem existing in the art known to inventors, the present application provides a second technical solution. The present application provides an automotive suspension system, including a suspension and the stabilization assembly, wherein the stabilization assembly is connected to the suspension.

Compared with the art known to inventors, the stabilization assembly of the present application comprises a supporting seat, a damping member, a stabilization member and a buffer member; the supporting seat has a accommodating space; the damping member is disposed in the accommodating space; one end of the stabilization member penetrates through the supporting seat, and a part of the stabilization member is disposed in the accommodating space and is slidably connected to the supporting seat via the damping member; the buffer member is disposed on the stabilization member; a buffer fluid is stored the an accommodating space of the supporting seat; the stabilization member slides relative to the supporting seat; the buffer fluid flows through the damping member and generates a first damping force; and the buffer member is configured to move in synchronism with the stabilization member and generate a second damping force under the hydraulic action of the buffer fluid, so as to stabilize the torsional motion of the motor vehicle by means of the first damping force and the second damping force. Therefore, the stabilization assembly can provide a first damping force by means of the damping member, and provide a second damping force by means of a hydraulic action when the buffer member moves relative to the buffer fluid, so that a corresponding damping force can be provided in different stages by means of a double function of the buffer member and the damping member, thereby enabling the motor vehicle to achieve self-adaptive adjustment of the damping force in different working conditions, and improving the practicability of the motor vehicle in different scenarios.

### Brief Description of the Drawings

To describe the technical solutions in the embodiments of the present application or in the prior art more clearly, the following briefly introduces the accompanying drawings required for describing the embodiments. Apparently, the accompanying drawings in the following description show merely some embodiments of the present application, and a person of ordinary skill in the art may still derive other drawings from these accompanying drawings without creative efforts.
Fig. 1 illustrates a schematic structural diagram of an embodiment of a stabilization assembly provided in the present application;
Fig. 2 illustrates a schematic illustration of a first damping force versus flow rate, frequency for a stabilization assembly provided in the present application;
Fig. 3 illustrates a schematic diagram illustrating a damping curve of a buffer member according to the present application;
Fig. 4 illustrates a graphical illustration of a torsional stiffness curve of a stabilization assembly provided herein.

In the figure, 10, stabilization assembly; 11, supporting seat; 111, seat body; 112, first seat cover; 113, second seat cover; 12, damping member; 121, first cavity; 122, second cavity; 13, stabilization member; 14, buffer member; 141, first buffer member; 142, second buffer member; 15, adjusting mechanism; 151, third cavity; 152, floating member.

### Detailed Description of the Embodiments

The present application will be further described in detail with reference to the accompanying drawings and embodiments. It should be noted that the following embodiments are merely used to illustrate the present application, but do not limit the scope of the present application. Likewise, the following embodiments are merely a part rather than all of the embodiments of the present application, and all other embodiments obtained by a person of ordinary skill in the art without creative efforts shall belong to the scope of protection of the present application.

Reference herein to "an embodiment" means that a particular feature, structure, or characteristic described in connection with the embodiment can be included in at least one embodiment of the present application. The appearances of the phrases in various places in the description are not necessarily all referring to the same embodiment, nor are separate or alternative embodiments mutually exclusive of other embodiments. It is apparent and implicitly understood by those skilled in the art that the embodiments described herein can be combined with other embodiments.

In the description of the present application, it should be noted that, unless specified or limited otherwise, the terms "installation", "disposition", "connection", and "connection" should be understood broadly, for example, may be a fixed connection, may be a detachable connection, or may be an integral connection; may be connected mechanically or electrically; may also be direct connections or indirect connections via intervening media. For a person of ordinary skill in the art, if the embodiments of the present application relate to a directional indicator (such as up, down, left, right, front, back,...), the directional indicator is only used for explaining a relative position relationship, a motion condition, etc. between each component in a certain specific posture (as shown in the figures), and if the specific posture changes, the directional indicator changes accordingly.

The embodiments of the present application firstly provide a stabilization assembly applied to a motor vehicle. The stabilization assembly can be specifically installed in an automotive suspension system of the motor vehicle. The stabilization assembly is configured to generate a damping force when the motor vehicle is in a torsional motion, so as to provide the motor vehicle with a corresponding roll stiffness, and suppress a transverse roll of a vehicle body of the motor vehicle.

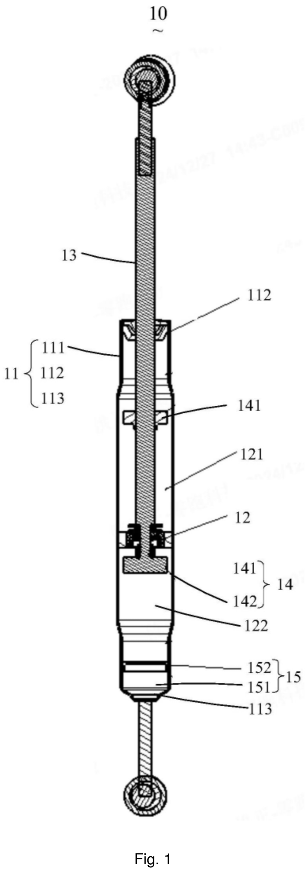

Please refer to Fig. 1. Fig. 1 is a schematic structural diagram of an embodiment of a stabilization assembly provided in the present application. As shown in Fig. 1, in this embodiment, the stabilization assembly 10 includes a supporting seat 11, a damping member 12, a stabilization member 13 and a buffer member 14.

The supporting seat 11 has an accommodating space; the damping member 12 is disposed in the accommodating space; one end of the stabilization member 13 penetrates through the supporting seat 11, and a part of the stabilization member 13 is disposed in the accommodating space and is slidably connected to the supporting seat 11 via the damping member 12; the buffer member 14 is disposed on the stabilization member 13; a buffer fluid is stored in an accommodating space of the supporting seat 11; the stabilization member 13 slides relative to the supporting seat 11; the buffer fluid flows through the damping member 12 and generates a first damping force; and the buffer member 14 is configured to move in synchronism with the stabilization member 13 and generate a second damping force under the hydraulic action of the buffer fluid, so as to stabilize the torsional motion of the motor vehicle by means of the first damping force and the second damping force.

In some embodiments, the supporting seat 11 may be provided with an opening and form an accommodating space through the opening, and the accommodating space is used for storing a buffer fluid. A damping member 12 is disposed on an inner wall of the accommodating space of the supporting seat 11. The damping member 12 can be, but is not limited to, a valve, a piston and other devices capable of regulating fluid. The damping member 12 can be formed with a flow hole. One end of the stabilization member 13 passes through an opening of the seat cover and the flow hole of the damping member 12 enters the accommodating space of the supporting seat 11. The stabilization member 13 can slide relative to the supporting seat 11. In possible embodiments, the damping member 12 can be fixed in the supporting seat 11, and the stabilization member 13 slides relative to the damping member 12; the damping member 12 can also slide along with the stabilization member 13, in some embodiments, the damping member 12 and the stabilization member 13 are fixed relative to each other, the damping member 12 slides along the accommodating space under the driving of the stabilization member 13, or the stabilization member 13 slides in the accommodating space and drives the buffer fluid to move, and the damping member 12 is driven by the buffer fluid to move in the same direction along with the stabilization member 13; the arrangement form of the damping member 12 may be adjusted based on a specific usage scenario, a damping force, and the like, which is not specifically limited herein.

During the sliding process, the stabilization member 13 pushes the buffer fluid in the accommodating space and enables the buffer fluid to pass through the flow hole of the damping member 12, and the damping member 12 can generate the first damping force by using the damping force generated when the buffer fluid passes through a narrow hole passage or the valve port, so as to stabilize the torsional motion of the motor vehicle by using the first damping force. In this case, when a torsional motion occurs in the motor vehicle, the motor vehicle tilts during the torsional motion and causes the stabilization assembly 10 of the motor vehicle to move. The stabilization member 13 will slide up and down along the accommodating space during the torsional motion of the motor vehicle, the flow rate of the buffer fluid in the accommodating space will be changed according to the speed of the up and down sliding, etc., and the vibration frequency during the movement of the stabilization member 13 will be changed according to the violent degree of the torsional motion, etc. As at least one factor of the sliding speed of the stabilization member 13, the flow rate change and the vibration frequency of the stabilization member 13 changes, the first damping force generated by the flow of the buffer fluid through the damping member 12 changes accordingly. In some embodiments, the damping member can correspondingly adjust the size of the flow hole when the flow rate of the buffer fluid in the accommodating space changes, and when the opening of the flow hole decreases, the first damping force generated by the flow of the buffer fluid increases, so as to provide a better damping effect; as the opening of the flow hole increases, the first damping force generated by the flow of the buffer fluid is reduced to improve the comfort of the vehicle.

The buffer fluid is a solution providing a relatively large resistance and buffering performance. The buffer fluid includes, but is not limited to, a liquid such as silicone oil, mineral oil, synthetic oil, polypropylene glycol, or a fluoride solution. The buffer member 14 is disposed on the stabilization member 13, and the buffer member 14 can be understood as a protruding structure disposed on the stabilization member 13. The buffer member 14 is configured to move in synchronism with the stabilization member 13 and synchronously pushing the buffer fluid when the stabilization member 13 slides up and down, so as to increase the resistance of the buffer fluid during the movement and generate a second damping force.

In the embodiment of the present application, the supporting seat 11 of the stabilization assembly 10 has the accommodating space; the damping member 12 is disposed in the accommodating space; one end of the stabilization member 13 penetrates through the supporting seat 11, and a part of the stabilization member 13 is disposed in the accommodating space and is slidably connected to the supporting seat 11 via the damping member 12; the buffer member 14 is disposed on the stabilization member 13; the buffer fluid is stored in an accommodating space of the supporting seat 11; the stabilization member 13 slides relative to the supporting seat 11; the buffer fluid flows through the damping member 12 and generates a first damping force; and the buffer member 14 is configured to move in synchronism with the stabilization member 13 and generate the second damping force under the hydraulic action of the buffer fluid, so as to stabilize the torsional motion the motor vehicle by means of the first damping force and the second damping force. Therefore, the stabilization assembly 10 can provide the first damping force by means of the damping member 12, and provide the second damping force by means of the hydraulic action when the buffer member 14 moves relative to the buffer fluid, thus, the corresponding damping force can be provided in different stages by the double effect of the damping members 12 and the buffer member 14, in this way, the damping force of the motor vehicle can be adaptively adjusted in different working conditions, thereby improving the practicability of the motor vehicle in different scenarios.

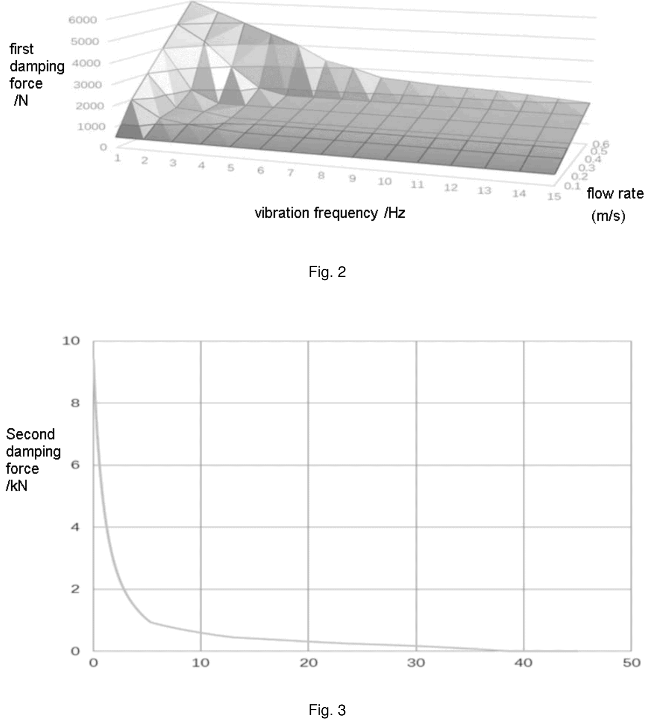

In an embodiment, please refer to Fig. 2. Fig. 2 is a schematic diagram of a relationship between the first damping force and a flow rate and a frequency of the stabilization assembly according to the present application. As shown in Fig. 2, if the frequency of the stabilization member 13 is small, it indicates that the greater the vibration or roll degree of the motor vehicle in the case of torsional motion, the greater the first damping force provided by the stabilization assembly 10 of this embodiment; when the frequency of the stabilization member 13 is less than or equal to 15 Hz, the first damping force of the stabilization assembly 10 is minimal when the frequency = 15 Hz, as the frequency is reduced, the first damping force rises slowly during an initial calibration stage, and the first damping force rapidly increases when the frequency is in the range of 2Hz-7Hz, thereby providing a large torsional energy storage capacity. This enables the stabilization assembly 10 of the present embodiment to stabilize the torsional motion of the motor vehicle through the large torsional energy storage capacity when the roll of the motor vehicle is exacerbated.

When the vibration or the roll degree during the torsional motion of the motor vehicle is greater, the flow velocity of the buffer fluid of the stabilization assembly 10 of the present embodiment is greater; when the flow rate of the buffer fluid is in the range of 0.05 m/s-0.35 m/s, with the increase of the flow rate, an anti-roll force rises slowly during an initial calibration stage, and the anti-roll force rapidly increases when the flow rate is in the range of 0.15 m/s to 0.2 m/s, thereby providing a large torsional energy storage capability. This enables the stabilization assembly 10 of this embodiment to stabilize the torsional motion of the motor vehicle through the large torsional energy storage capability when the roll of the motor vehicle is exacerbated.

In one embodiment, the supporting seat 11 includes a seat body 111, a first seat cover 112 and a second seat cover 113, the seat body 111 forms the accommodating space, the first seat cover 112 is disposed on one side of the seat body 111 and is configured to seal the accommodating space, and the stabilization member 13 penetrates through the first seat cover 112; the second seat cover 113 is disposed on a side of the seat body 111 away from the first seat cover 112, and the second seat cover 113 is configured to be connected to a suspension of the motor vehicle through a connector.

In some embodiments, the accommodating space is provided in a seat body 111 of the supporting seat 11, the accommodating space is configured to store the buffer fluid, a first seat cover 112 and a second seat cover 113 are respectively disposed at two ends of the seat body 111 corresponding to the accommodating space, the opening is provided on the first seat cover 112, and a stabilization member 13 penetrates through the opening of the first seat cover 112, so that a part of the stabilization member 13 is disposed in the accommodating space. In a possible implementation, the supporting seat 11 further includes a closing component, where the closing component is configured to close a position of the opening of the first seat cover 112, in some embodiments, close the opening by means of oil sealing or the like. The second seat cover 113 is disposed at one end of the seat body 111 away from the first seat cover 112, and the second seat cover 113 is used for being connected to the suspension of the motor vehicle through the connector. The stabilization assembly 10 comprises a first connector and a second connector, wherein one end of the stabilization member 13 away from the first seat cover 112 is connected to the suspension via the first connecting member, and the second seat cover 113 is connected to the suspension via the second connecting member.

In some embodiments, the stabilization member 13 penetrates the damping member 12, and the damping member 12 is used for dividing the accommodating space into a first cavity 121 and a second cavity 122, wherein the first cavity 121 is disposed between the first seat cover 112 and the damping member 12, and the second cavity 122 is disposed between the second seat cover 113 and the damping member 12; the buffer fluid flows through the damping member 12, and the damping member 12 slides relatively in the seat body 111 under the hydraulic action of the buffer member 14, so as to adjust the volume of the first chamber 121 and/or the volume of the second chamber 122.

In some embodiments, the stabilization member 13 penetrates through the damping member 12, that is, a first part of the stabilization member 13 is disposed in the second cavity 122, a second part of the stabilization member 13 is disposed in the first cavity 121, and a third part of the stabilization member 13 is disposed outside the accommodating space. The damping member 12 is disposed between the first seat cover 112 and the second seat cover 113, and the damping member 12 is configured to divide the accommodating space into the first cavity 121 and the second cavity 122. When the stabilization member 13 slides up and down along the accommodating space, the buffer fluid flows through the damping member 12 to push the damping member 12 to move with the stabilization member 13 in the same direction under the hydraulic action of the buffer member 14. Therefore, in the stabilization assembly 10 of this embodiment, the damping member 12 can slide relatively in the seat body 111 to adjust the volume of the buffer fluid in the first cavity 121 and the second cavity 122, so as to ensure that the buffer fluid is fully filled in the cavity, which facilitates the relative action to the buffer fluid and generates the second damping force for hydraulic buffering during the subsequent movement of the buffer member 14.

In some embodiments, when the stabilization member 13 is configured to move upward, the damping member 12 moves upward under the hydraulic action of the buffer fluid, so that the volume of the first cavity 121 is reduced; when the stabilization member 13 is configured to move downwards, the damping member 12 moves downwards under the hydraulic action of the buffer fluid, so that the volume of the first cavity 121 is enlarged.

In some embodiments, the stabilization assembly 10 includes a first buffer member 141 disposed on the stabilization member 13 and located between the first seat cover 112 and the damping member 12. Wherein the torsional motion occurs in the motor vehicle, the stabilization member 13 is configured to move upward, the damping member 12 is configured to move upward along with the stabilization member 13 and enabling the buffer fluid to enter the second cavity 122 from the first cavity 121, so as to generate the first damping force; the first buffer member 141 is configured to move upward along with the stabilization member 13, and push the buffer fluid in the first cavity 121 during the movement to generate the second damping force.

In some embodiments, the buffer member 14 of the stabilization assembly 10 may correspond to a first buffer member 141, the first buffer member 141 is disposed in the first cavity 121, the first buffer member 141 is a protruding structure disposed on the stabilization member 13, the first buffer member 141 and the stabilization member 13 may be integrally arranged, and the first buffer member 141 may also be fixed on the stabilization member 13 by means of bonding, welding, screwing, etc. the maximum diameter of the part where the first buffer member 141 is fixed onto the stabilization member 13 is a first diameter, and the maximum diameter of the other part of the stabilization member 13 except for the first buffer member 141 is a second diameter, the second diameter is smaller than the first diameter, so as to increase the contact area between the first buffer member 141 and the buffer fluid, increase the resistance generated when the first buffer member 141 pushes the buffer fluid in the first cavity 121, and enable the first buffer member 141 to generate the second damping force through the hydraulic action when the buffer fluid is pushed.

When the damping member 12 moves upward along with the stabilization member 13, the volume of the first cavity 121 is reduced, so as to ensure that the first cavity 121 is filled with the buffer fluid, prevent an empty space from being generated when the stabilization member 13 moves downward subsequently, and ensure a damping effect of the buffer fluid. When the damping member 12 and the stabilization member 13 move upwards, the relative position between the damping member 12 and the stabilization member 13 will change, the distance between the first buffer member 141 and the first seat cover 112 gradually decreases, and the second damping force generated by the hydraulic action when the first buffer member 141 pushes the buffer fluid gradually increases, so as to stabilize the torsional motion of the motor vehicle by means of the second damping force. When the length of the stabilization member 13 in the second cavity 122 is the minimum, i.e. the distance between the first buffer member 141 and the first seat cover 112 is the shortest, the second damping force generated by the hydraulic action when the first buffer member 141 pushes the buffer fluid is the maximum.

Please refer to Fig. 3. Fig. 3 is a schematic diagram showing a damping curve of a buffer member according to the present application. As shown in Fig. 3, for the first buffer member 141, the horizontal coordinate of the damping curve is the distance h (mm) between the first buffer member 141 and the first seat cover 112, the ordinate of the damping curve is the second damping force F(kN) generated by the first buffer member 141 under the hydraulic action, during the period in which the stabilization member 13 is configured to move upward, the distance h between the first buffer member 141 and the first seat cover 112 decreases gradually from 40 mm, the second damping force F generated by the hydraulic action when the first buffer member 141 pushes the buffer fluid rises slowly; when the distance h reaches about 5 mm, the second damping force F increases rapidly, and the first buffer member 141 achieves the effects of rapid damping and lifting, hydraulic buffering, and anti-collision.

In some embodiments, the stabilization assembly 10 includes a second buffer member 142 disposed at an end of the stabilization member 13 away from the first seat cover 112. Wherein a torsional motion occurs in the motor vehicle, the stabilization member 13 is configured to move downwards, the damping member 12 is configured to move downwards along with the stabilization member 13 and enable the buffer fluid to enter the first cavity 121 from the second cavity 122, so as to generate the first damping force; the second buffer member 142 is configured to move downwards along with the stabilization member 13, and push the buffer fluid in the second cavity 122 during the movement to generate the second damping force.

In some embodiments, the buffer member 14 of the stabilization assembly 10 may correspond to a second buffer member 142, the second buffer member 142 is disposed in the second cavity 122, and the second buffer member 142 is a protruding structure disposed at an end of the stabilization member 13. The second buffer member 142 and the stabilization member 13 can be integrally arranged, and the second buffer member 142 can also be fixed on the stabilization member 13 by means of bonding, welding, screwing, etc. the maximum diameter of the part where the second buffer member 142 is fixed onto the stabilization member 13 is a third diameter, and the maximum diameter of the other part of the stabilization member 13 except for the first buffer member 141 and the second buffer member 142 is a second diameter, the second diameter is smaller than the third diameter, so as to increase the contact area between the second buffer member 142 and the buffer fluid, increase the resistance generated when the second buffer member 142 pushes the buffer fluid in the second cavity 122, and enable the second buffer member 142 to generate the second damping force through the hydraulic action when the buffer fluid is pushed.

When the damping member 12 moves downward along with the stabilization member 13, the volume of the first cavity 121 is increased to ensure that the second cavity 122 is filled with the buffer fluid, prevent an empty space from being generated when the stabilization member 13 moves upward subsequently, and ensure the damping effect of the buffer fluid. The buffer fluid enters the first cavity 121 from the second cavity 122 through the damping member 12 to generate the first damping force correspondingly. Meanwhile, when the damping member 12 and the stabilization member 13 move downwards, the distance between the second buffer member 142 and the damping member 12 gradually increases, that is, the length of the stabilization member 13 inserted into the second cavity 122 gradually increases, and the second damping force generated by the hydraulic action when the second buffer member 142 pushes the buffer fluid gradually increases, so as to stabilize the torsional motion of the motor vehicle by means of the second damping force. When the length of the stabilization member 13 in the second cavity 122 is the largest, that is, the distance between the second buffer member 142 and the damping member 12 is the farthest, the second damping force generated by the hydraulic action when the second buffer member 142 pushes the buffer fluid is the largest.

In some embodiments, the stabilization assembly 10 further includes an adjusting mechanism 15, the adjusting mechanism 15 being disposed in the supporting seat 11 and located in the second cavity 122, and the adjusting mechanism 15 being configured to slide along with the stabilization member 13, so as to ensure that the first cavity 121 is filled with the buffer fluid.

In some embodiments, the adjusting mechanism 15 is disposed in the second cavity 122 of the accommodating space, and the adjusting mechanism 15 is configured to slide along with the stabilization member 13 to adjust the volume of the second cavity 122. In some embodiments, when the stabilization member 13 is configured to move upward, the adjusting mechanism 15 moves upward along with the damping member 12, so as to adjust the volumes of the first cavity 121 and the second cavity 122, thereby ensuring that the buffer fluid in the first cavity 121 is full, so as to prevent that a free path is generated due to that the buffer fluid is not full when the stabilization member 13 is subsequently configured to move downward, thereby improving the reliability of the stabilization assembly 10.

The adjusting mechanism 15 comprises a third cavity 151 and a floating member 152, wherein the floating member 152 is disposed between the damping member 12 and the second seat cover 113; the third cavity 151 is an accommodation space between the floating member 152 and the second seat cover 113; the third cavity 151 is configured to store a regulating gas; and the regulating gas is configured to drive the floating member 152 to slide along with the stabilization member 13 so as to adjust the volume of the second cavity 122.

In some embodiments, the regulating gas stored in the third cavity 151 may be, but is not limited to, a high-pressure gas. When the damping member 12 slides up and down along with the stabilization member 13, the volume of the second cavity 122 changes, and when the volume of the second cavity 122 changes, the regulating gas in the third cavity 151 is configured to push the floating member 152 to move in the same direction along with the stabilization member 13 by means of the effect of a pressure difference, so as to ensure that the first cavity 121 and the second cavity 122 are filled with the buffer fluid by adjusting the volume of the second cavity 122. When the damping member 12 moves upward along with the stabilization member 13, the volume of the first cavity 121 decreases; the floating member 152 moves upward along with the damping member 12 to adjust the volume of the second cavity 122, so as to ensure that the buffer fluid in the first cavity 121 is full, and the buffer fluid in the first cavity 121 enters the second cavity 122 through the damping member 12. When the damping member 12 moves downwards along with the stabilization member 13, the volume of the first cavity 121 is enlarged, the floating member 152 moves downwards along with the damping member 12, so as to adjust the volume of the second cavity 122, and ensure that the buffer fluid of the second cavity 122 is fully filled, and the buffer fluid of the second cavity 122 enters the first cavity 121 via the damping member 12, thereby improving the damping effect of the buffer fluid.

In some embodiments, as shown in Fig. 3, for the second buffer member 142, the horizontal coordinate of the damping curve is the distance h (mm) between the second buffer member 142 and the floating member 152, and the vertical coordinate of the damping curve is the second damping force F (kN) generated by the second buffer member 142 under the hydraulic action. In the process that the stabilization member 13 is configured to move downwards, the distance h between the second buffer member 142 and the floating member 152 decreases gradually from 40 mm, and the second damping force F generated by the hydraulic action when the second buffer member 142 pushes the buffer fluid rises slowly; when the distance h reaches about 5 mm, the second damping force F increases rapidly, and the second buffer member 142 serves to increase the damping speed, buffer the hydraulic action, and prevent the impact.

In other embodiments, the stabilization assembly 10 in the present embodiment can adapt to the stability performance of the motor vehicle with different requirements by adjusting different parameters such as the relative positions of the damping member 12, the first buffer member 141, the second buffer member 142 and the like, the volume ratio of the first cavity 121 to the second cavity 122, and the type of the buffer fluid, so as to improve the practicability of the motor vehicle in different scenarios.

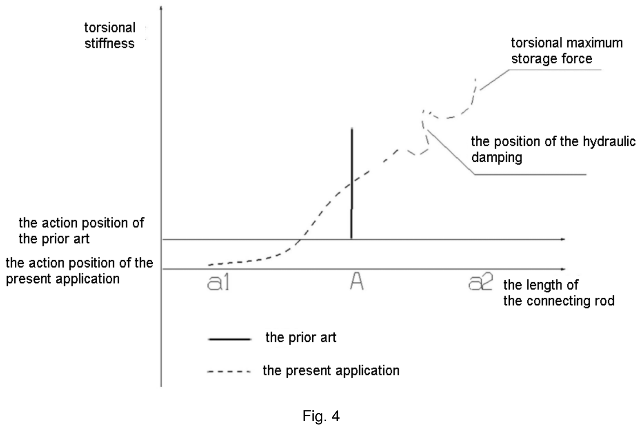

In one embodiment, in the embodiments of the present application, a torsional stiffness curve of the stabilization assembly 10 can be established according to a relationship between a damping force provided by the stabilization assembly 10 and a lateral inclination angle during the motor vehicle in the torsional motion. The torsional stiffness refers to a total elastic restoring moment exerted by the automotive suspension system to a vehicle body per unit of vehicle body rotation angle when the motor vehicle tilts. By describing an anti-rolling force of the motor vehicle by means of the torsional stiffness, the rolling stability of the motor vehicle can be characterized. Please refer to Fig. 4. Fig. 4 is a schematic curve diagram of a torsional stiffness curve of a stabilization assembly according to the present application. As shown in figure 4, the length of the connecting rod can be understood as the length of the stabilization member 13 disposed outside the accommodating space; the dotted line in Fig. 4 is configured to represent the torsional stiffness provided by the stabilization assembly 10 of the embodiment of the present application at different lengths of the connecting rod; and the solid line in Fig. 4 is configured to represent the torsional stiffness provided at different lengths of the connecting rod when the damping force in the art known to inventors is at a fixed value.

In some embodiments, when the length of the connecting rod is a1, i.e. the first buffer member 141 is in contact with the damping member 12 and the second buffer member 142 is inserted into the maximum limit position of the length of the second cavity 122; and when the length of the connecting rod is a2, i.e. the second buffer member 142 is in contact with the damping member 12 and the second buffer member 142 is inserted into the minimum limit position of the length of the second cavity 122. The stabilization member 13 of the stabilization assembly 10 of the embodiment of the present application is configured to move upward, the length of the connecting rod gradually increases, and in the initial calibration stage at a position near a1, the torsional stiffness provided by the stabilization assembly 10 is relatively small; during the calibration stage near A, the torsional stiffness provided by the stabilization assembly 10 increases rapidly, and when the length of the connecting rod is between A~a2, as the hydraulic action of the first buffer member 141, the second buffer member 142 and the buffer fluid works, the second damping force generated by the first buffer member 141, the second buffer member 142 gradually increases, thus, the torsional stiffness rises in a fluctuating manner, and reaches a maximum value when the length of the connecting rod is at a2.

Therefore, during the process of stabilizing the torsional motion of the motor vehicle, the stabilization assembly 10 of the present embodiment has a relatively small torsional stiffness at the initial calibration stage and rapidly increases the torsional stiffness at the post-half-stroke calibration stage, so that the stabilization assembly 10 has a relatively large torsional energy storage capability at the post-half stroke, thereby satisfying the requirement of the motor vehicle for an anti-roll effect under a complex road surface, for example, under conditions such as the motor vehicle running on a pothole road, a large torsional energy storage capacity is required to ensure stability and comfort during handling. That is to say, the torsional stiffness curve of the stabilization assembly 10 of the present embodiment can better meet the requirements of chassis calibration of the motor vehicle, thereby effectively improving the steering stability and comfort of the motor vehicle.

The embodiments of the present application further provide an automotive suspension system. The automotive suspension system is configured to connect a wheel and a vehicle body of the motor vehicle. The automotive suspension system is configured to absorb a road impact, controll a movement track of the wheel, and transmit a driving force, so as to ensure stable running of the motor vehicle under different road conditions. In this embodiment, the automotive suspension system includes a suspension (not shown) and the stabilization assembly 10 as described above connected to the suspension.

In particular, the stabilization assembly 10 can serve as an elastic element in an automotive suspension system to store and release energy and to buffer impacts. One end of the stabilization assembly 10 is connected to a suspension, and the other end of the stabilization assembly 10 is connected to a braking system of the motor vehicle. The stabilization assembly 10 can reduce vibration transmission to the vehicle body by adjusting damping in the torsional motion process of the motor vehicle, thereby reducing a turning roll of the vehicle body, and being beneficial to improving the steering stability and comfort of the motor vehicle. Exemplarily, when the motor vehicle is in a torsional motion, the stabilization assembly 10 may move upward/downward under the drive of the torsional motion, so as to slow down the vibration transferred by the brake system by using the generated corresponding damping force, so as to reduce the roll caused by the vibration transferred to the suspension.

Embodiments of the present application further provide the motor vehicle. The motor vehicle may be, but is not limited to, a new energy motor vehicle, an electric motor vehicle, an internal combustion engine motor vehicle, a hybrid motor vehicle, and the like. The motor vehicle comprises the automotive suspension system of the above embodiment.

The foregoing descriptions are merely embodiments of the present application, but are not intended to limit the patent scope of the present application. Any equivalent structure or equivalent process transformation made by using the description and the accompanying drawings of the present application, or direct or indirect application in other related technical fields shall fall within the patent scope of protection of the present application.

## Claims

1. A stabilization assembly (10) for use in a motor vehicle, the stabilization assembly (10) comprising:
a supporting seat (11) having an accommodating space;
a damping member (12) disposed in the accommodating space;
a stabilization member (13), one end of the stabilization member (13) penetrating through the supporting seat (11), a part of the stabilization member (13) being disposed in the accommodating space and being slidably connected to the supporting seat (11) via the damping member (12);
a buffer member (14) disposed on the stabilization member (13);
wherein buffer fluid is stored in the accommodating space of the supporting seat (11), and the stabilization member (13) slides relative to the supporting seat (11), the buffer fluid flows through the damping member (12) and generates a first damping force; the buffer member (14) is configured to move in synchronism with the stabilization member (13) and generate a second damping force under a hydraulic action of the buffer fluid, to stabilize a torsional motion of the motor vehicle with the first damping force and the second damping force.

2. The stabilization assembly (10) according to claim 1, wherein the supporting seat (11) comprises a seat body (111), a first seat cover (112) and a second seat cover (113), the seat body (111) forms the accommodating space, and the stabilization member (13) penetrates through the first seat cover (112); the second seat cover (113) is disposed on one side of the seat body (111) away from the first seat cover (112), and the second seat cover (113) is configured to be connected to a suspension of the motor vehicle via a connector.

3. The stabilization assembly (10) according to claim 2, wherein the stabilization member (13) penetrates through the damping member (12), the damping member (12) is configured to divide the accommodation space into a first cavity (121) and a second cavity, the first cavity (121) is disposed between the first seat cover (112) and the damping member (12), and the second cavity is disposed between the second seat cover (113) and the damping member (12);
wherein the buffer fluid flows through the damping member (12), and the damping member (12) slides relatively in the seat body (111) under a hydraulic action of the buffer member (14), so as to adjust a volume of the first cavity (121) and/or a volume of the second cavity.

4. The stabilization assembly (10) according to claim 3, wherein the stabilization assembly (10) comprises a first buffer member (141), the first buffer member (141) is disposed on the stabilization member (13), and the first buffer member (141) is disposed between the first seat cover (112) and the damping member (12).

5. The stabilization assembly (10) according to claim 4, wherein the motor vehicle is in the torsional motion, the stabilization member (13) is configured to move upward, and the damping member (12) is configured to move upward along with the stabilization member (13) and enable the buffer fluid to enter the second cavity from the first cavity (121) to generate the first damping force; and the first buffer member (141) is configured to move upward along with the stabilization member (13), and push the buffer fluid in the first cavity (121) during a movement to generate the second damping force.

6. The stabilization assembly (10) according to claim 3, wherein the stabilization assembly (10) comprises a second buffer member (142), and the second buffer member (142) is disposed at one end of the stabilization member (13) away from the first seat cover (112).

7. The stabilization assembly (10) according to claim 6, wherein the motor vehicle is in the torsional motion, the stabilization member (13) is configured to move downward, and the damping member (12) is configured to move downward along with the stabilization member (13) and enable the buffer fluid to enter the first cavity (121) from the second cavity to generate the first damping force; and the second buffer member (142) is configured to move downward along with the stabilization member (13), and push the buffer fluid in the second cavity during a movement to generate the second damping force.

8. The stabilization assembly (10) according to claim 3, further comprising an adjusting mechanism (15), wherein the adjusting mechanism (15) is disposed on the supporting seat (11) and located in the second cavity, the adjusting mechanism (15) is configured to slide along with the stabilization member (13) to ensure that the first cavity (121) is filled with the buffer fluid.

9. The stabilization assembly (10) according to claim 8 wherein the adjusting mechanism (15) comprises a third cavity (151) and a floating member (152), the floating member (152) is disposed between the damping member (12) and the second seat cover (113), and the third cavity (151) is an accommodation space between the floating member (152) and the second seat cover (113), the third cavity (151) is configured to store a regulating gas, and the regulating gas is configured to drive the floating member (152) to slide along with the stabilization member (13) so as to adjust the volume of the second cavity (122).

10. An automotive suspension system, comprising:
a suspension;
a stabilization assembly (10) according to any one of claims 1-9, the stabilization assembly (10) being connected to the suspension.
